# DEMANDE DE BREVET EUROPEEN

(11) **EP 1 361 128 A1**
(43) Date de publication de la demande: **12.11.2003**
(21) Numéro de dépôt: 03009597.0
(22) Date de dépôt: 29.04.2003
(51) Int. Cl.: B60T 13/57

(54) **Servomoteur utilisant un joint d'étanchéité et de calage**

(30) Priorité: 07.05.2002 FR 0205769
(71) Demandeur: ROBERT BOSCH GmbH, 70442 Stuttgart (DE)
(72) Inventeur: Michon, Jean-Pierre, 77178 Saint-Pathus (FR); Beylerian, Bruno, 95380 Louvres (FR)
(74) Mandataire: Hurwic, Aleksander Wiktor

(57) **Abrégé**

L'invention concerne un servomoteur pneumatique d'assistance au freinage comprenant une enveloppe rigide (10) localement conformée en une cheminée (3), un moyeu (5) monté coulissant dans une ouverture (30) de la cheminée (3), un joint d'étanchéité annulaire (6) interposé entre le moyeu (5) et la cheminée (3), et des organes prévus pour caler le moyeu (5) dans une position de repos par rapport à la cheminée (3).

Selon l'invention, le joint d'étanchéité (6) comprend un matériau élastomère (61) conformé en anneau et un insert métallique annulaire (62), les organes de calage (71, 72) étant pour partie formés par l'insert (62).

## Description

La présente invention concerne, de façon générale, les systèmes de freinage hydraulique de véhicules automobiles dotés d'une assistance pneumatique au freinage.

Plus précisément, l'invention concerne un servomoteur pneumatique d'assistance au freinage comprenant une enveloppe rigide localement conformée en une cheminée percée d'une ouverture, une cloison mobile, un moyeu solidaire de la cloison mobile, un joint d'étanchéité annulaire, et des moyens de calage, la cloison mobile délimitant de façon étanche des chambres avant et arrière de volumes variables et complémentaires à l'intérieur de l'enveloppe rigide, le moyeu étant cylindrique et monté coulissant dans l'ouverture de la cheminée entre une position de repos et au moins une position active, le joint d'étanchéité étant disposé entre le moyeu et la cheminée, et les moyens de calage fixant la position de repos du moyeu par rapport à l'enveloppe.

Des dispositifs de ce type sont bien connus dans l'art antérieur, tel qu'illustré par exemple par les documents de brevets US - 3 470 697, FR - 2 532 084, et FR - 2 658 466.

En dépit du caractère relativement traditionnel de la technique concernée, les servomoteurs continuent de faire l'objet de recherches qui visent à en réduire encore les coûts de fabrication sans aucune altération de leur fiabilité.

La présente invention, qui s'inscrit dans ce contexte, a pour but de proposer un servomoteur répondant à ce besoin.

A cette fin, le servomoteur selon l'invention, par ailleurs conforme à la définition générique qu'en donne le préambule ci-dessus, est essentiellement caractérisé en ce que le joint d'étanchéité comprend un matériau élastomère conformé en anneau et un insert métallique annulaire, en ce que, dans une zone de rétrécissement radial de l'insert, le matériau élastomère est en contact étanche avec la cheminée dans un espace radialement externe à l'insert, et en contact étanche avec le moyeu dans un espace radialement interne à l'insert, en ce que, dans une zone d'élargissement radial de l'insert, l'insert est reçu dans la cheminée à coulissement axial sans jeu radial, et en ce que les moyens de calage comprennent une première paire de surfaces de retenue dont l'une est constituée par une première extrémité de l'insert et l'autre formée sur la cheminée, et une seconde paire de surfaces de retenue dont l'une est constituée par une seconde extrémité de l'insert et l'autre formée sur le moyeu.

Grâce à un tel agencement, le joint d'étanchéité peut à la fois remplir sa fonction première d'étanchéité entre le moyeu et la cheminée, et définir la position de repos qu'adopte le moyeu par rapport à l'enveloppe.

Dans le mode de réalisation préféré de l'invention, la cheminée est au moins partiellement cylindrique et la surface de retenue de la première paire qui est portée par la cheminée est définie par au moins un ergot formé par estampage dans la cheminée.

L'insert présente avantageusement un premier repli par lequel il se rapproche radialement de la cheminée et dont un bord forme la première extrémité de cet insert.

L'insert peut aussi présenter un second repli par lequel il se rapproche radialement de la cheminée et qui porte celle des surfaces de retenue de la seconde paire qui est constituée par la seconde extrémité de cet insert.

Il peut être utile de prévoir, en fonction du diamètre du second repli de l'insert, que la cheminée présente un élargissement radial dans lequel est logé ce second repli.

Enfin, la cheminée peut présenter, en regard de la zone de rétrécissement radial de l'insert, une gorge annulaire interne qui délimite l'espace radialement externe à l'insert, et dans laquelle le matériau élastomère s'engage élastiquement, bloquant ainsi le joint d'étanchéité en translation par rapport à la cheminée.

D'autres caractéristiques et avantages de l'invention ressortiront clairement de la description qui en est faite ci-après, à titre indicatif et nullement limitatif, en référence aux dessins annexés, dans lesquels:
- la Figure 1 est une vue en coupe longitudinale d'un module de freinage connu comprenant un servomoteur et un maître-cylindre; et
- la Figure 2 est une vue en coupe longitudinale partielle agrandie d'un servomoteur conforme à l'invention.

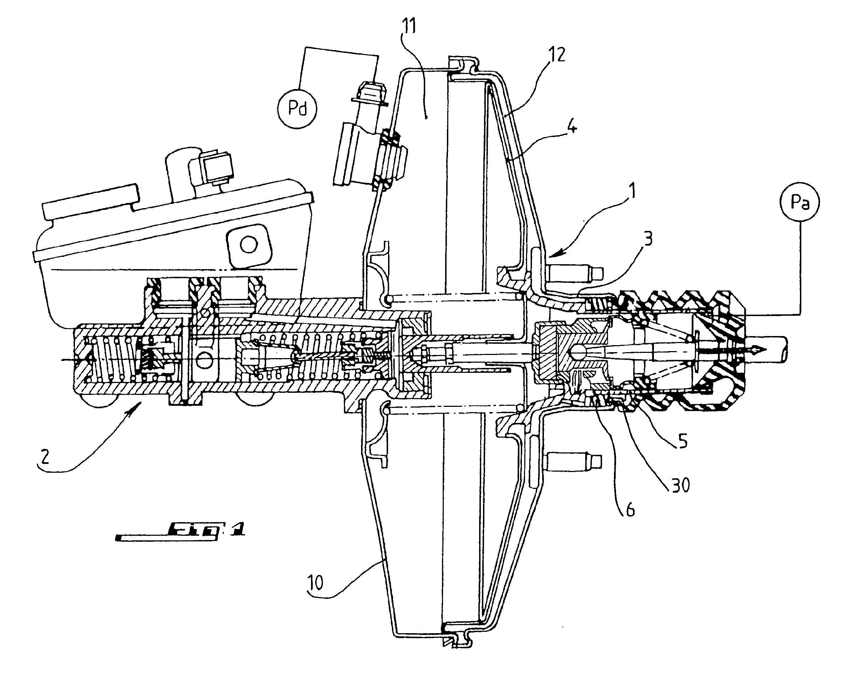

Un servomoteur pneumatique d'assistance au freinage, tel que 1 (figure 1) est traditionnellement utilisé pour faciliter l'actionnement d'un maître-cylindre 2 auquel il est couplé.

Un tel servomoteur comprend, de façon connue en soi, une enveloppe rigide 10 localement conformée en une cheminée cylindrique 3 percée d'une ouverture 30.

Une cloison mobile 2 sépare de façon étanche l'intérieur de l'enveloppe rigide 10 et y délimite une chambre avant 11 et une chambre arrière 12, ces chambres ayant des volumes variables et complémentaires.

En fonctionnement, la chambre avant 11 est soumise à une première pression Pd relativement basse, à laquelle la chambre arrière 12 est également soumise lorsque le servomoteur est au repos.

Lorsque le servomoteur est actionné, la chambre arrière 12 est en revanche soumise à une pression contrôlée à une valeur supérieure, pouvant par exemple atteindre la pression atmosphérique Pa, de sorte que la différence de pression entre les chambres avant et arrière développe une force d'assistance au freinage, qui est utilisée pour actionner le maître-cylindre 2.

La cloison mobile 4 est solidaire d'un moyeu cylindrique 5 monté coulissant au travers de l'ouverture 30 de la cheminée 3, un joint d'étanchéité annulaire 6 étant disposé entre le moyeu 5 et la cheminée 3.

Le moyeu 5 adopte, dans la cheminée 3, une position de repos lorsque le servomoteur est au repos et se déplace vers une position active lorsque le servomoteur est actionné, des organes étant prévus pour caler le moyeu 5 dans sa position de repos.

Selon un aspect essentiel de l'invention, le joint d'étanchéité 6 comprend un matériau élastomère 61 conformé en anneau et un insert métallique annulaire 62, les organes de calage étant pour partie formés par l'insert 62.

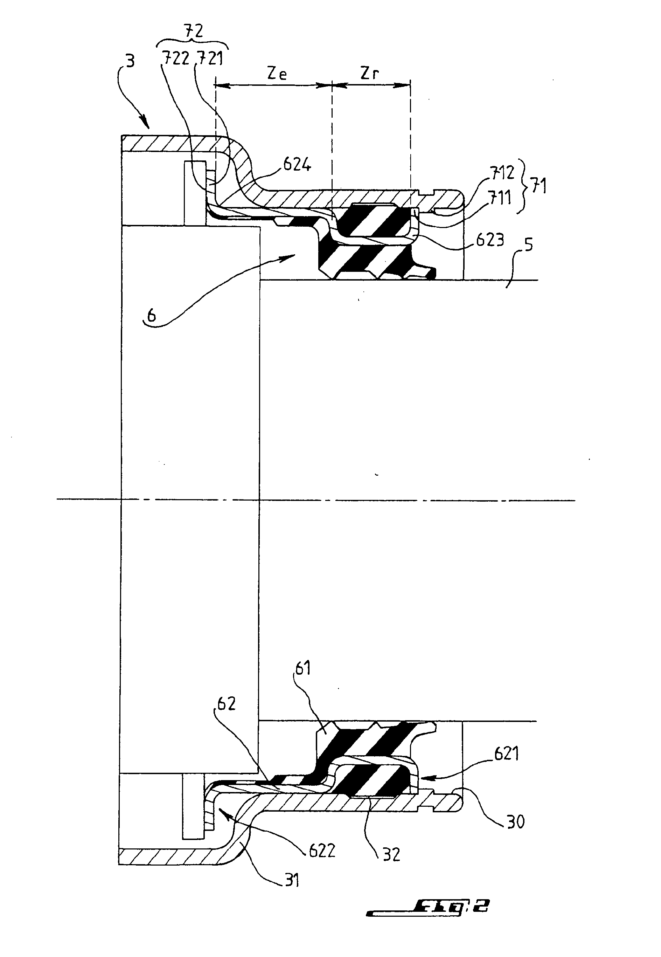

Plus précisément (figure 2), l'insert 62 présente une zone Zr de rétrécissement radial qui délimite d'une part un espace radialement externe à l'insert 62, dans lequel le matériau élastomère 61 est en contact étanche avec la cheminée 3, et d'autre part un espace radialement interne à l'insert 62, dans lequel le matériau élastomère 61 est en contact étanche avec le moyeu 5.

L'insert 62 présente par ailleurs une zone Ze d'élargissement radial, dans laquelle cet insert est reçu à coulissement axial sans jeu radial dans la cheminée 3.

Les moyens destinés à caler le moyeu 5 en position de repos, c'est-à-dire à définir avec précision la position relative de repos du moyeu 5 dans la cheminée 3, comprennent deux paires, 71 et 72, de surfaces de retenue en coopération mutuelle.

La première paire 71 de surfaces de retenue comprend une surface 711 constituée par l'extrémité la plus externe 621 de l'insert 62, et une surface 712 formée sur la cheminée 3.

La seconde paire 72 de surfaces de retenue comprend une surface 721 constituée par l'extrémité la plus interne 622 de l'insert 62, et une surface 722 formée sur le moyeu 5.

La surface de retenue 712 appartenant à la première paire 71 et portée par la cheminée 3 est par exemple définie par trois ergots, tels que 712, formés par estampage dans la cheminée 3 et régulièrement répartis sur la périphérie interne de la cheminée.

Du côté de son extrémité la plus externe 621, l'insert 62 peut présenter un repli 623 par lequel il se rapproche radialement de la cheminée 3, et dont le bord 711 est en appui sur les ergots 712.

Du côté de son extrémité la plus interne 622, l'insert 62 peut présenter un autre repli 624 par lequel il se rapproche radialement de la cheminée 3 et qui porte la surface de retenue 721 de la seconde paire 72 qu'offre cet insert 62.

Comme le montre la figure 2, la cheminée 3 peut éventuellement présenter un élargissement radial 31 dans lequel est logé le second repli 624 de l'insert 62.

Pour bloquer en translation le joint d'étanchéité 6 dans la cheminée 3, il peut être utile de ménager dans la cheminée 3, en regard de la zone Zr de rétrécissement radial de l'insert 62, une gorge annulaire interne 32 qui délimite l'espace radialement externe à l'insert, et dans laquelle le matériau élastomère 61 vient s'engager élastiquement.

La surface de retenue 722 portée par le moyeu 5 est par exemple formée par une face d'une couronne ou d'un ensemble de plots, qui se logent dans l'élargissement radial 31 de la cheminée 3.

Non seulement le servomoteur agencé de la manière décrite conduit à une économie de matière dans la mesure où le joint d'étanchéité 6 sert lui-même à définir la position de repos du moyeu 5 dans la cheminée, mais il conduit en outre à une simplification de son réglage dans la mesure où le calage du moyeu en position de repos se résume à choisir l'emplacement des ergots 712 et où l'opération d'estampage au cours de laquelle sont formés ces ergots peut être réalisée après le montage du servomoteur et après vérification et prise en compte de ses dimensions.

## Revendications

1. Servomoteur pneumatique d'assistance au freinage comprenant une enveloppe rigide (10) localement conformée en une cheminée (3) percée d'une ouverture (30), une cloison mobile (4), un moyeu (5) solidaire de la cloison mobile (4), un joint d'étanchéité annulaire (6), et des moyens de calage (71, 72), la cloison mobile (4) délimitant de façon étanche des chambres avant et arrière (11, 12) de volumes variables et complémentaires à l'intérieur de l'enveloppe rigide (10), le moyeu (5) étant cylindrique et monté coulissant dans l'ouverture (30) de la cheminée (3) entre une position de repos et au moins une position active, le joint d'étanchéité (6) étant disposé entre le moyeu (5) et la cheminée (3), et les moyens de calage (71, 72) fixant la position de repos du moyeu (5) par rapport à l'enveloppe (10), **caractérisé en ce que** le joint d'étanchéité (6) comprend un matériau élastomère (61) conformé en anneau et un insert métallique annulaire (62), **en ce que**, dans une zone (Zr) de rétrécissement radial de l'insert, le matériau élastomère (61) est en contact étanche avec la cheminée (3) dans un espace radialement externe à l'insert (62), et en contact étanche avec le moyeu (5) dans un espace radialement interne à l'insert (62), **en ce que**, dans une zone (Ze) d'élargissement radial de l'insert, l'insert (62) est reçu dans la cheminée (3) à coulissement axial sans jeu radial, et **en ce que** les moyens de calage (71, 72) comprennent une première paire (71) de surfaces de retenue (711, 712) dont l'une (711) est constituée par une première extrémité (621) de l'insert (62) et l'autre (712) formée sur la cheminée (3), et une seconde paire (72) de surfaces de retenue (721, 722) dont l'une (721) est constituée par une seconde extrémité (622) de l'insert (62) et l'autre (722) formée sur le moyeu (5).

2. Servomoteur pneumatique suivant la revendication 1, **caractérisé en ce que** la cheminée (3) est au moins partiellement cylindrique et **en ce que** la surface de retenue (712) de la première paire (71) qui est portée par la cheminée (3) est définie par au moins un ergot (712) formé par estampage dans la cheminée (3).

3. Servomoteur pneumatique suivant la revendication 1 ou 2, **caractérisé en ce que** l'insert (62) présente un premier repli (623) par lequel il se rapproche radialement de la cheminée (3) et dont un bord (711) forme la première extrémité (621) de cet insert (62).

4. Servomoteur pneumatique suivant l'une quelconque des revendications précédentes, **caractérisé en ce que** l'insert (62) présente un second repli (624) par lequel il se rapproche radialement de la cheminée (3) et qui porte celle (721) des surfaces de retenue (721, 722) de la seconde paire (72) qui est constituée par la seconde extrémité (622) de cet insert (62).

5. Servomoteur pneumatique suivant la revendication 4, **caractérisé en ce que** la cheminée (3) présente un élargissement radial (31) dans lequel est logé le second repli (624) de l'insert (62).

6. Servomoteur pneumatique suivant l'une quelconque des revendications précédentes, **caractérisé en ce que** la cheminée (3), en regard de la zone (Zr) de rétrécissement radial de l'insert (62), présente une gorge annulaire interne (32) qui délimite l'espace radialement externe à l'insert, et dans laquelle le matériau élastomère (61) s'engage élastiquement, bloquant ainsi le joint d'étanchéité (6) en translation par rapport à la cheminée (3).
